Europäisches Patentamt

European Patent Office

Office européen des brevets

(11) Publication number: **0 476 776 A1**

# EUROPEAN PATENT APPLICATION

(21) Application number: **91202388.4**

(22) Date of filing: **17.09.91**

(51) Int. Cl.5: **B01D 3/10**, B01D 3/06, B01D 5/00, C08J 3/14

(30) Priority: **17.09.90 NL 9002041**

(43) Date of publication of application:
**25.03.92 Bulletin 92/13**

(84) Designated Contracting States:
**AT BE CH DE DK ES FR GB GR IT LI LU SE**

(71) Applicant: **STORK X-CEL B.V.**
**Wim de Körverstraat 43a**
**NL-5831 AN Boxmeer(NL)**

(72) Inventor: **de Bie, Hendrikus Johannes Josephus**
**4, Boslaan**
**NL-6598 AR Heijen(NL)**

(74) Representative: **van der Arend, Adrianus G.A., Ir. et al**
**EXTERPATENT B.V. P.O. Box 90649**
**NL-2509 LP The Hague(NL)**

(54) Method for separating a mixture of a solvent and a plastic and installation for using the method.

(57) Method and installation for using the method for separating a mixture of a solvent and a plastic, comprising heating (3) the mixture to an extent such that at least some of the solvent is converted into vapour and cooling (12) the vapour to an extent such that the solvent condenses (10) out of the vapour, in which the mixture is stirred. The mixture is kept or brought under a pressure such that, and the mixture is heated to an extent such that, the plastic flocculates out without vaporisation of the solvent and that, after the plastic has essentially flocculated out, the pressure of the mixture is lowered to an extent such that the solvent vaporises at a lower temperature than the temperature at which the plastic has essentially flocculated out.

_FIG. 1._

The invention relates to a method for separating a mixture of a solvent and a plastic, comprising heating the mixture to an extent such that at least some of the solvent is converted into vapour and cooling the vapour to an extent such that the solvent condenses out of the vapour. The plastic can be, for example, waste from paint, varnish, ink or glue.

A method of this type is known in practice. With the known method the mixture is heated under atmospheric pressure to an extent such that the solvent vaporises above an associated vaporisation temperature.

The known method has the disadvantage that during the vaporisation the plastic cakes in an undesired manner to form hard pieces of material which is difficult to remove from a vaporisation vessel and which can be reused to a very limited extent.

The aim of the invention is to overcome the disadvantage of the known method.

According to the invention, this aim is achieved for the method mentioned in the preamble in that the mixture is stirred, the mixture is kept or brought under a pressure such that, and the mixture is heated to an extent such that, the plastic flocculates out without vaporisation of the solvent and that, after the plastic has essentially flocculated out, the pressure of the mixture is lowered to an extent such that the solvent vaporises at a lower temperature than the temperature at which the plastic has essentially flocculated out. Because the plastic flocculates out before the solvent vaporises, undesired local caking of the plastic is counteracted. Furthermore, a plastic residue is obtained which is fine-grained and consequently better suited for reuse.

Because the vaporisation takes place at a lower temperature than the flocculation temperature, the mixture does not initially have to be heated after flocculating out. However, in order to enable the vaporisation to take place at a predetermined amount per unit time it is preferable additionally to heat the mixture, if it has fallen below a predetermined temperature, to an extent such that the temperature of the mixture remains above this predetermined temperature.

If the boiling point of the solvent under atmospheric pressure is higher than the flocculation temperature of the plastic, it is possible, according to a further development of the method, for the pressure of the mixture, before and during the essential flocculation, to be made lower than the atmospheric pressure at most to the extent that, under the then prevailing pressure, the boiling point of the solvent is higher than the flocculation temperature of the plastic. Consequently, lowering of the pressure can already be started before the flocculation without the solvent vaporising before and during the essential flocculation.

If the boiling point of the solvent under atmospheric pressure is lower than the flocculation temperature of the plastic, according to another development of the method the pressure of the mixture, before and during the essential flocculation, is made higher than the atmospheric pressure at least to the extent that, under the then prevailing pressure, the boiling point of the solvent is higher than the flocculation temperature of the plastic. By this means vaporisation of the solvent before the flocculation is prevented.

Preferably, the pressure of the mixture after the essential flocculation is made lower than the atmospheric pressure. In this case the solvent can vaporise at a relatively low temperature, as a result of which impairment of the plastic residue as a consequence of long subjection to a high temperature is counteracted. The plastic residue is consequently better suited for reuse. If the mixture, for example, consists of white spirit with polyvinyl chloride, the plasticiser would react with the polyvinyl chloride in the case of vaporisation under atmospheric pressure, as a result of which said polyvinyl chloride is reusable only to a very limited extent. In the case of vaporisation at an adequate lower pressure, and thus at an adequate lower temperature, some of the plasticiser remains present and a product is obtained which is very readily reusable.

Preferably, the mixture is stirred during the vaporisation of the solvent. By this means, the vaporisation is promoted and agglomeration of the particles obtained during the flocculation is counteracted. In the case of an adequate vaporisation, a residue can be obtained by this means which contains 99% solids, is essentially granular and consequently can be transported easily. This residue can be used, for example, for extrusion applications.

Preferably, the mixture is fed through a dispersing apparatus. By this means, a plastic residue obtained after the vaporisation can consist of very fine grains, for example particles of polyvinyl chloride having a diameter smaller than 200 micrometres. The residue can consequently be reused as ink paste.

The invention also relates to an installation according to one of Claims 11 to 14 inclusive, which is suitable for the application of the method according to the invention.

The invention is illustrated with reference to the drawings. In the drawings:

Fig. 1 shows a diagram of an installation which is suitable for application of the method according to the invention;

Fig. 2 shows a first container for a solvent/plastic mixture in the installation of Fig.

1, with partially cut-away outer wall;

Fig. 3 shows the cooling means and a second container for condensed solvent in the installation of Fig. 1; and Fig. 4 shows a pressure vessel which is intended for installation upstream of the installation of Fig. 1.

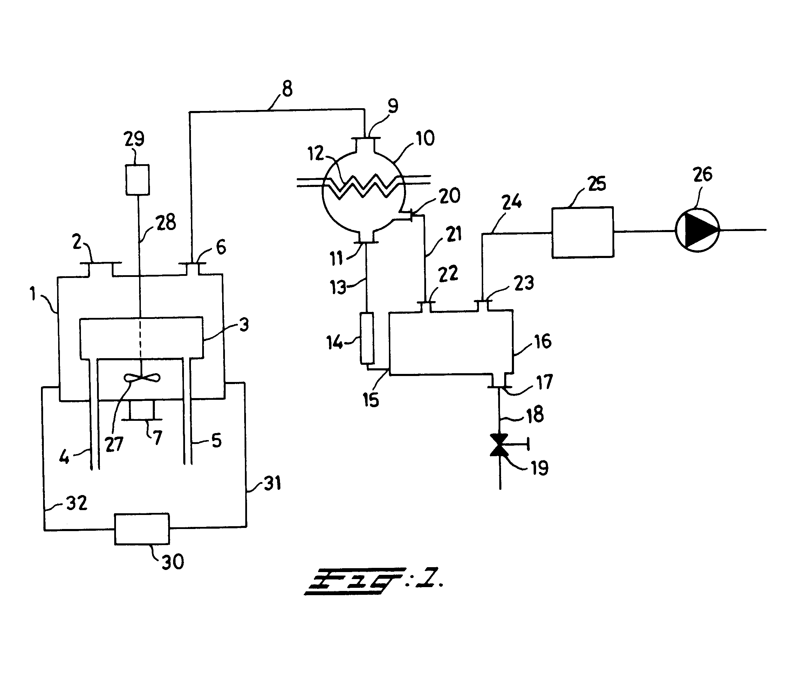

The installation shown in Fig. 1 comprises a gastight first container 1 having an inlet 2 for feeding a mixture of solvent and a plastic into the container 1. The plastic is, for example, waste from paint, varnish, ink or glue, for example the printing agent which is obtained on cleaning screen printing elements covered with the printing agent using the solvent. A heating installation 3, which in the example is a liquid heater having an inlet 4 and an outlet 5, is fitted against or in the container 1. The container 1 also has an upper outlet 6 for releasing a solvent vapour and a lower outlet 7 for discharging a plastic residue which has remained behind in the container 1 after the vaporisation of the mixture.

The outlet 6 of the container 1 is connected via a line 8 to an inlet 9 of a condenser 10 which has a condensate outlet 11. The condenser 10 has cooling means which can consist of a spiral 12 of a line through which a coolant, such as water, is transported.

The condensate outlet 11 of the condenser 10 is connected via a line 13 and a level sight glass 14 to a lower condensate inlet 15 of a second container 16 for the condensed solvent. The condensed solvent can be discharged via a lower outlet 17 and a line 18 having a valve 19.

An outlet 20 in the vicinity of the outlet 11 of the condenser 10 is connected via a line 21 to an upper inlet 22. An upper outlet 23 of the second container 16 is connected via a line 24 and pressure setting and adjusting means 25 to a vacuum pump 26. The evacuating means 25, 26 are consequently able to bring the chambers of the first container 1, the condenser 10 and the second container 16 to a low pressure.

A stirrer element 27, which is connected via a shaft 28 to a motor 29, is fitted in the first container 1.

The method according to the invention will be explained below with reference to Fig. 1.

After the mixture of the solvent and the plastic has been transported into the first container 1, the mixture is heated to a temperature at which the plastic flocculates out. A vacuum is applied to the chamber of the first container 1 during heating, but at least after the flocculation temperature has been reached. By this means, the solvent will vaporise at a lower temperature than if the pressure in the container 1 were atmospheric pressure.

The solvent vapour passes via the line 8 into the condenser 10, in which the vapour is cooled by the cooling means 12 to an extent such that the vapour condenses and passes via the line 13 into the second container 16.

During the vaporisation, the mixture in the first container 1 is heated only to an extent such that an adequate amount of solvent per unit time vaporises.

By actuating the stirrer element 27 by means of the motor 29, at least during the flocculation, the uniform formation of particles in the mixture is promoted and the vaporisation is promoted and agglomeration of the particles is counteracted. By this means, the production of a granular structure of the residue after the vaporisation is promoted, as a result of which the residue can be transported easily out of the container 1. Depending on the type of plastic, it is then, moreover, suitable for reuse.

The production of a residue having a very fine granular structure can be promoted by using a dispersing apparatus 30, which is connected via lines 31 and 32 to the container 1 for cycling the mixture and, by this means, comminuting of the particles present therein.

In an experiment, a mixture of 80 litres of white spirit and approximately 12 kg of polyvinyl chloride was used.

The mixture was heated to about 140°C, the mixture flocculating out.

The container containing the mixture is then gradually evacuated to about 2 mbar, during which operation the temperature of the mixture in the container 1 fell gradually to about 70°C, after which the mixture was kept at this temperature by heating.

The mixture was stirred during the preflocculation and the vaporisation.

Approximately 2 hours after the start of the evacuation, pulverulent polyvinyl chloride and white spirit condensate could be transported out of the containers 1 and 16 respectively. The solids content of the powder was approximately 99% and the average particle size of the particles was approximately 200 micrometres. Polyvinyl chloride powder of this type is suitable for reuse, for example by injection moulding extrusion.

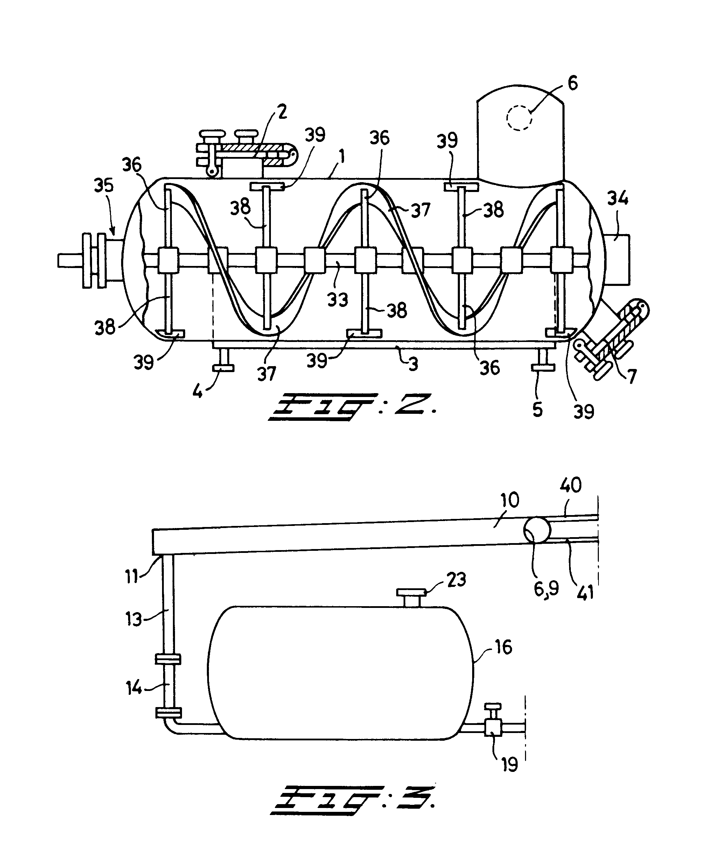

The embodiment of the first container 1 shown in Fig. 2, in which the connections to the lines 31 and 32 have been omitted, is essentially cylindrical with a horizontal axis. On the axis there is a shaft 33, one free end of which, at 34, is accommodated in a bearing 34 and which, at the other side of the cylinder, is accommodated in a bearing 35 and protrudes through the wall of the container 1, where it is connected to a motor, which is not shown, which turns the shaft 33 alternately to the left and to the right. Around the shaft 33, a belt screw 37 is fixed to the shaft 33 by means of rods 36. The external diameter of the belt screw 37 is essentially the same as the internal diameter of the cylindrical container 1.

Agitation elements 39 are also fitted to the shaft 33 via bars 38.

The belt screw 37 and the agitation elements 39 form stirrer means for stirring the mixture in the container 1. By means of the action of the stirrer means 37, 39, the mixture is essentially uniformly distributed, as a result of which the flocculation and vaporisation is promoted and agglomeration of the particles in the container 1 is counteracted, as a result of which, after the vaporisation, the residue can be discharged easily as powder via the outlet 7.

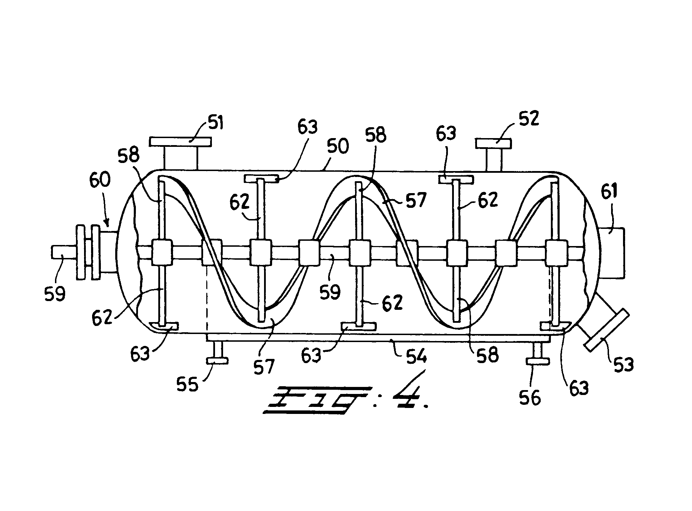

The condenser 10 shown in Fig. 3 consists of a tube which from the inlet 9 thereof has a slope of, for example, 2%. A spiral, consisting of a line with ends 40 and 41 for transporting a coolant, such as water, therein, is fitted in the tube 10.

The vapour which enters the condenser at inlet 9 condenses against the spiral inside the condenser 10 and then flows towards the lowest end at the outlet 11 thereof, after which it can flow via the tube 13 and the level sight glass 14 into the second container 16.

Figure 4 shows an essentially cylindrical pressure vessel 50 which has a horizontal axis and can be used if the boiling point of the solvent under atmospheric pressure is lower than the flocculation temperature of the plastic. The pressure vessel 50 is, for example, designed to withstand a high static pressure, for example 30 bars. The pressure vessel 50 has an inlet 51 for feeding the mixture obtained from cleaning of the printing elements and consisting of a solvent and a plastic into the container 50. The mixture can be fed into the container 50 via a pump (not shown) and a valve (not shown). The pressure vessel 50 also has an inlet 52 which is connected to pressure means (not shown) for bringing the interior of the holder 50 to a high pressure. After processing of the mixture in the pressure vessel 50, the mixture can be fed via an outlet 53 and an expansion valve (not shown) into the container 1 shown in Figures 1 and 2.

The pressure vessel 50 also has a heating installation 54, which, for example, is a liquid heater having an inlet 55 and an outlet 56. The pressure vessel 50 also has a stirrer and scraper element which in the example shown consists of a belt screw 57 which is attached by means of rods 58 to a shaft 59, which is located on the axis of the pressure vessel 50 and which is rotatably mounted in gastight bearings 60 and 61 and which is driven outside the pressure vessel 50 by a motor (not shown). The external diameter of the belt screw 57 is essentially the same as the internal diameter of the cylindrical pressure vessel 50.

Agitation elements 63 are also fitted to the shaft 59 via rods 62.

The stirrer means 57, 63 have the same function as the stirrer means 37 and 39 for the container 1.

The mixture is fed, optionally continuously, under high pressure into the pressure vessel 50, the pressure inside the container being so high that the boiling point of the solvent under the prevailing pressure is higher than the temperature at which the plastic flocculates out. After this pressure has been reached, the mixture is heated by means of the heating installation 54 and, at the same time, the shaft 59 of the stirrer means 57, 63 is driven. The mixture will flocculate out when a specific temperature is reached. After the mixture has essentially flocculated out, it is transported via the outlet 53 and the said expansion valve (not shown) into the container 1 shown in Figures 1 and 2. As a result of the appreciably lower pressure in the container 1, the solvent is already partially vaporised by "flash vaporisation". The flocculated mixture in the container 1 is then additionally heated to an extent such that the solvent further vaporises. If desired, during this operation the pressure in the container 1 can be made lower than the atmospheric pressure, as in the case, illustrated with reference to Figs. 1 to 3 inclusive, in which the mixture consists of a solvent which has a boiling point under atmospheric pressure which is higher than the flocculation temperature of the plastic. By this means impairment of the quality of the plastic residue as a consequence of long subjection to a high temperature is counteracted.

If the starting mixture, for example, consists of ethyl acetate as solvent, the boiling point of which under atmospheric pressure is 77°C, and the plastic is polyvinyl chloride, the gel point of which is 140°C, the pressure inside the pressure vessel 50 is brought to a pressure higher than about 8 bar at 140°C prior to the flocculation. On leaving the pressure vessel 50, the slurry-like mixture is then subjected to a lowering in pressure of about 7 bar, as a result of which direct flash vaporisation of non-bonded solvent takes place. The solvent bonded to the plastic can then be liberated as a result of vaporisation by means of heating in the container 1.

It can be deduced from the above explanation that the invention provides a simple method and a simple and inexpensive installation for carrying out the method, with which a mixture of a solvent and a plastic can be separated easily, rapidly and inexpensively and with which a high degree of purity of the solvent separated off can be obtained and a fine-grained structure of a solid constituent can be obtained which can be transported easily and is suitable for reuse.

**Claims**

1. Method for separating a mixture of a solvent and a plastic, comprising heating the mixture to an extent such that at least some of the solvent is converted into vapour and cooling the vapour to an extent such that the solvent condenses out of the vapour, characterised in that the mixture is stirred, the mixture is kept or brought under a pressure such that, and the mixture is heated to an extent such that, the plastic flocculates out without vaporisation of the solvent and that, after the plastic has essentially flocculated out, the pressure of the mixture is lowered to an extent such that the solvent vaporises at a lower temperature than the temperature at which the plastic has essentially flocculated out.

2. Method according to Claim 1, characterised in that after the essential flocculation of the plastic, the mixture is supportingly heated to an extent such that the temperature of the mixture is at least as high as a boiling point of the mixture under the reduced pressure after the flocculation.

3. Method according to Claim 1 or 2, the boiling point of the solvent under atmospheric pressure being higher than the flocculation temperature of the plastic, characterised in that the pressure of the mixture, before and during the essential flocculation, is made lower than the atmospheric pressure at most to the extent that, under the then prevailing pressure, the boiling point of the solvent is higher than the flocculation temperature of the plastic.

4. Method according to Claim 1 or 2, the boiling point of the solvent under atmospheric pressure being lower than the flocculation temperature of the plastic, characterised in that the pressure of the mixture, before and during the essential flocculation, is made higher than the atmospheric pressure at least to an extent such that, under the then prevailing pressure, the boiling point of the solvent is higher than the flocculation temperature of the plastic.

5. Method according to one of the preceding claims, characterised in that the pressure of the mixture after the essential flocculation is made lower than the atmospheric pressure.

6. Method according to one of the preceding claims, characterised in that the mixture is stirred during the vaporisation of the solvent.

7. Method according to one of the preceding claims, characterised in that the mixture is cycled via a dispersing apparatus.

8. Method according to Claim 1, the mixture being white spirit with polyvinyl chloride as plastic, characterised in that prior to the flocculation the mixture is heated to a temperature at which the polyvinyl chloride flocculates out.

9. Method according to Claim 1, the solvent having a boiling point lower than 150°C under atmospheric pressure and the plastic being polyvinyl chloride, characterised in that prior to the flocculation the pressure of the mixture is made such that no boiling of the mixture occurs at the flocculation temperature and the mixture is then heated to the temperature at which the polyvinyl chloride flocculates out.

10. Method according to Claim 8 or 9, characterised in that the pressure after the flocculation is made such that, during the vaporisation, the temperature of the mixture is kept between 50 and 80°.

11. Installation for separating a mixture of a solvent and a plastic, comprising a first container having heating means for heating the mixture therein to an extent such that the solvent vaporises, cooling means for condensing the solvent vapour and a second container for collecting the condensed solvent therein, characterised in that the containers are closable gastight, in that evacuation means connected to the containers are present for applying a vacuum to the containers and in that stirrer means are fitted in the first container.

12. Installation according to Claim 11, for a mixture for which a boiling point of the solvent under atmospheric pressure is lower than a flocculation temperature of the plastic, characterised by a pressure vessel which is fitted upstream of the first container, is closable gastight, has heating means and is connected to means for bringing the pressure vessel under pressure, the pressure vessel being intended for receiving the mixture and allowing the plastic to flocculate out under pressure without vaporisation of the solvent, after which the mixture leaves the pressure vessel via an expansion valve towards the first container.

13. Installation according to Claim 12, characterised in that stirrer and scraper means are fitted in the pressure vessel.

**14.** Installation according to one of Claims 11, 12 or 13, characterised in that the first container is connected to a dispersing apparatus for cycling the mixture via the dispersing apparatus.

Fig. 1.

_FIG:2._

_FIG:3._

FIG. 4.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-1 343 214 (BASF)<br>* page 1, right column, line 6 - page 2, left column, line 11; claim 1 * * | 1-3 | B 01 D 3/10<br>B 01 D 3/06<br>B 01 D 5/00<br>C 08 J 3/14 |
| | – – – | | |
| X | FR-A-2 424 288 (SUMITOMO CHEMICAL CO)<br>* page 2, line 22 - line 33 * * * page 3, line 34 - page 4, line 29 * * | 1-3,5,8 | |
| | – – – | | |
| A | DE-B-1 079 327 (ESSO RESEARCH)<br>* column 9, line 30 - line 40; claims 1-3; figure 3 * * | 1-4,8 | |
| | – – – | | |
| A | DE-A-1 800 938 (NATIONAL DISTILLERS AND CHEMICALCORP)<br>* page 8, paragraph 2 - page 10, line 6 * * * page 11, line 3 - line 15 * * * page 24, line 8 - page 26, line 2 * * | 1-3,8 | |
| | – – – – – | | |

|  |
|---|
| TECHNICAL FIELDS SEARCHED (Int. Cl.5) |
| B 01 D<br>C 08 J<br>C 08 F |

The present search report has been drawn up for all claims

| Place of search | Date of completion of search | Examiner |
|---|---|---|
| The Hague | 30 December 91 | VAN BELLEGHEM W.R. |